# EUROPEAN PATENT APPLICATION

(11) **EP 3 418 800 A1**
(43) Date of publication of application: **26.12.2018**
(21) Application number: 17753004.5
(22) Date of filing: 06.02.2017
(51) Int. Cl.: G03B 21/10, G03B 21/14

(54) **DISPLAY DEVICE**

(30) Priority: 19.02.2016 JP 2016030046
(71) Applicant: Sony Corporation, Tokyo 108-0075 (JP)
(72) Inventor: ISHIHARA Atsushi, Tokyo 108-0075 (JP); KURATA Yoshinori, Tokyo 108-0075 (JP); SAWAI Kunihito, Tokyo 108-0075 (JP)
(74) Representative: MFG Patentanwälte Meyer-Wildhagen Meggle-Freund Gerhard PartG mbB
(86) International application number: PCT/JP2017/004159
(87) International publication number: WO 2017/141744

(57) **Abstract**

The present technology relates to a display device capable of improving visibility of an image. A display device includes: a projection unit adapted to project projection light in order to display an image; a direction change unit adapted to change a direction of the projection light; a projection plane visible from outside; and a drive unit adapted to set, on the projection plane or the outside, a projection position of the image by the projection light by changing the direction of the projection light changed by the direction change unit. The present technology can be applied to, for example, a robot type display device.

## Description

### TECHNICAL FIELD

The present technology relates to a display device, and particularly relates to a display device capable of changing a projection position of an image.

### BACKGROUND ART

In the related art, proposed is a technology in which an image is projected on an upper surface of a desk from a projector installed above in a device that performs processing in accordance with a gesture inside a three-dimensional space (refer to Patent Document 1, for example).

Additionally, proposed in the related art is a projector capable of projecting an image on an installation surface on which the projector is installed and a surface perpendicular to the installation surface. The projector rotates a reflection mirror having a planar reflection surface and a curved reflection surface to project an image on the installation surface by the planar reflection surface and project an image on the surface perpendicular to the installation surface by the curved reflection surface (refer to Patent Document 2, for example).

### CITATION LIST

### PATENT DOCUMENT

Patent Document 1: Japanese Patent Application Laid-Open No. 2012-27796
Patent Document 2: Japanese Patent Application Laid-Open No. 2009-31336

### SUMMARY OF THE INVENTION

### PROBLEMS TO BE SOLVED BY THE INVENTION

However, according to technologies disclosed in Patent Documents 1 and 2, when an obstacle is present between a projector and a projection plane, a part or all of an image is not cleanly projected, and visibility is deteriorated.

Therefore, the present technology is directed to improve visibility of an image.

### SOLUTIONS TO PROBLEMS

An aspect of the present technology includes: a projection unit adapted to project projection light in order to display an image; a direction change unit adapted to change a direction of the projection light; a projection plane visible from outside; and a first drive unit adapted to set, on the projection plane or the outside, a projection position of the image by the projection light by changing the direction of the projection light changed by the direction change unit.

A second drive unit adapted to change directions of the projection unit, the projection plane, and the direction change unit, and a main body provided with the first drive unit can be further provided.

It is possible to further provide a control unit adapted to move a position at which the image is projected to the outside by controlling the second drive unit on the basis of surrounding condition of the display device to change the direction of the main body.

The control unit can change the direction of the main body in a case where an obstacle that obstructs the projection light is detected.

The control unit further can control the first drive unit on the basis of surrounding condition of the display device to switch the projection position of the image to the projection plane or the outside.

The control unit can set the projection position of the image on the projection plane in a case where an obstacle that obstructs the projection light is detected.

An output unit adapted to output information is further provided, and the control unit causes the output unit to output information providing a notification of presence of an obstacle in a case where the obstacle that obstructs the projection light is detected.

The control unit can cause the projection unit to project projection light in order to display an image that provides a notification of presence of an obstacle in a case where the obstacle that obstructs the projection light is detected.

A detection unit adapted to detect surrounding condition of the display device can be further provided.

A third drive unit adapted to change a direction of the detection unit is further provided, and the control unit can change the direction of the detection unit by controlling the third drive unit on the basis of the surrounding condition of the display device.

The detection unit can be installed above the main body.

A base portion adapted to support the main body in a manner rotatable in a horizontal direction is further provided, and the second drive unit can change the direction of the main body by rotating the main body.

It is possible to further provide a control unit adapted to control the first drive unit on the basis of surrounding condition of the display device to switch the projection position of the image to the projection plane or the outside.

The direction change unit is provided with a mirror supported in a manner rotatable around an axis extending in a horizontal direction, and the first drive unit can change a direction of the mirror.

The image can be projected on the projection plane or a surface on which the display device is placed.

A projection port of the projection unit and the direction change unit are arranged inside a shielded space provided with an opening, and the projection light having the direction changed by the direction change unit can be emitted to the outside of the shielded space from the opening in a direction more downward than the horizontal direction.

A cover that closes the opening and applied with antireflection treatment can be further provided.

The projection plane can be directed in a direction more upward than the horizontal direction.

The projection plane is formed of a diffusion screen.

An operation unit adapted to detect operation on the projection plane can be further provided.

According to one aspect of the present technology, projection light is projected in order to display an image, and the projection position of the image by the projection light is set on the projection plane or the outside by changing the direction of the projection light changed by the direction change unit.

### EFFECTS OF THE INVENTION

According to one aspect of the present technology, a projection position of an image can be changed. Particularly, according to one aspect of the present technology, visibility of an image can be improved.

Note that the effects recited in the present specification are examples, and the effects of the present technology are not limited to the effects recited in the present specification and may include additional effects.

### BRIEF DESCRIPTION OF DRAWINGS

Fig. 1 is a front view schematically illustrating an exemplary external structure of a display device to which the present technology is applied.
Fig. 2 is a left side view schematically illustrating an exemplary external structure of the display device to which the present technology is applied.
Fig. 3 is a front view schematically illustrating the display device in a state in which an outer package is removed.
Fig. 4 is a left side view schematically illustrating the display device in the state in which the outer package is removed.
Fig. 5 is a front view schematically illustrating a head portion of the display device in the state in which the outer package is removed.
Fig. 6 is a left side view schematically illustrating the head portion of the display device in the state in which the outer package is removed.
Fig. 7 is a left side view schematically illustrating a cross-section of the head portion of the display device in the state in which the outer package is removed.
Fig. 8 is a left side view schematically illustrating a cross-section of a main body of the display device in the state in which the outer package is removed.
Fig. 9 is a left side view schematically illustrating a base portion of the display device in the state in which the outer package is removed.
Fig. 10 is a block diagram illustrating exemplary functional components of the display device.

### MODE FOR CARRYING OUT THE INVENTION

A mode to implement the present technology (hereinafter referred to as "embodiment") will be described below. Note that the description will be provided in the following order.
1. Embodiment
2. Modified Examples

### <1. Embodiment>

### [Exemplary External Structure of Display Device 10]

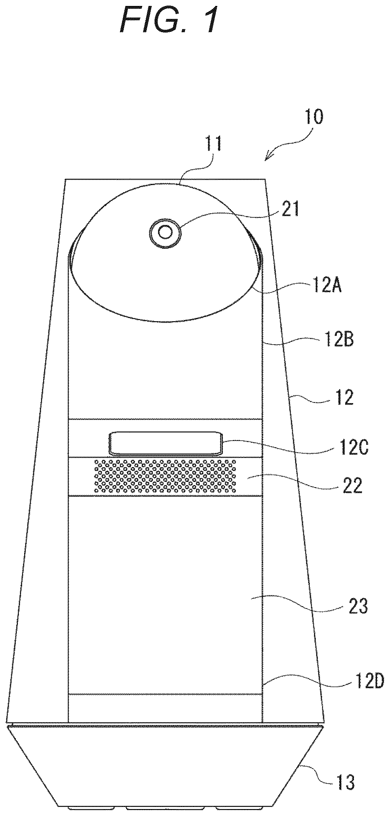

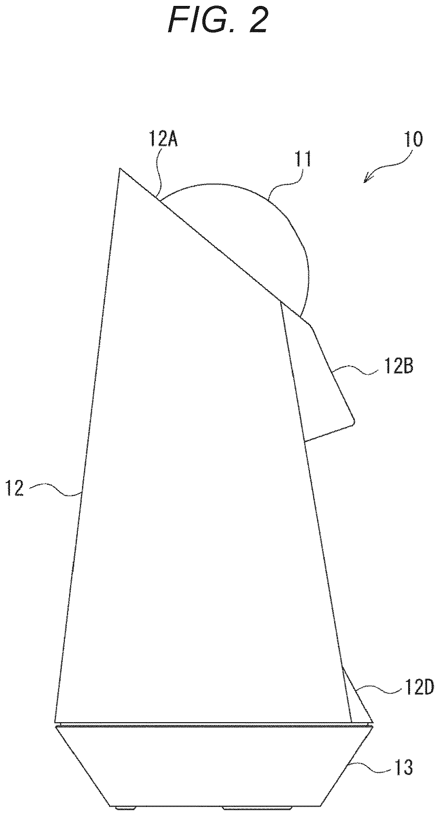

First, an exemplary external structure of a display device 10 to which the present technology is applied will be described with reference to Figs. 1 and 2. Fig. 1 is a front view schematically illustrating an exemplary external structure of the display device 10, and Fig. 2 is a left side view schematically illustrating an exemplary external structure of the display device 10.

The display device 10 is a robot type display device capable of performing interactive communication with a user.

The display device 10 includes a head portion 11, a main body 12, and a base portion 13.

The main body 12 has a shape close to a truncated cone. An upper surface of the main body 12 is directed in a direction obliquely front upward, and a circular opening 12A is formed. In addition, the head portion 11 is exposed from the opening 12A. A portion of the head portion 11 exposed from the opening 12A is substantially hemispherical.

The head portion 11 can be rotated in a perpendicular direction around axes extending in a horizontal direction (tilt axes A1L and A1R described later). For example, a nodding motion of the robot is reproduced by the head portion 11 being rotated in the perpendicular direction. Additionally, a photographing direction of a photographing unit 21 provided at the head portion 11 can be vertically moved.

Furthermore, the head portion 11 can be rotated in an oblique direction around an axis extending in an upward oblique direction (pan axis A2 described later). For example, a head direction changing motion or a head shaking motion of the robot is reproduced by the head portion 11 being rotated in the oblique direction. Additionally, the photographing direction of the photographing unit 21 can be laterally moved.

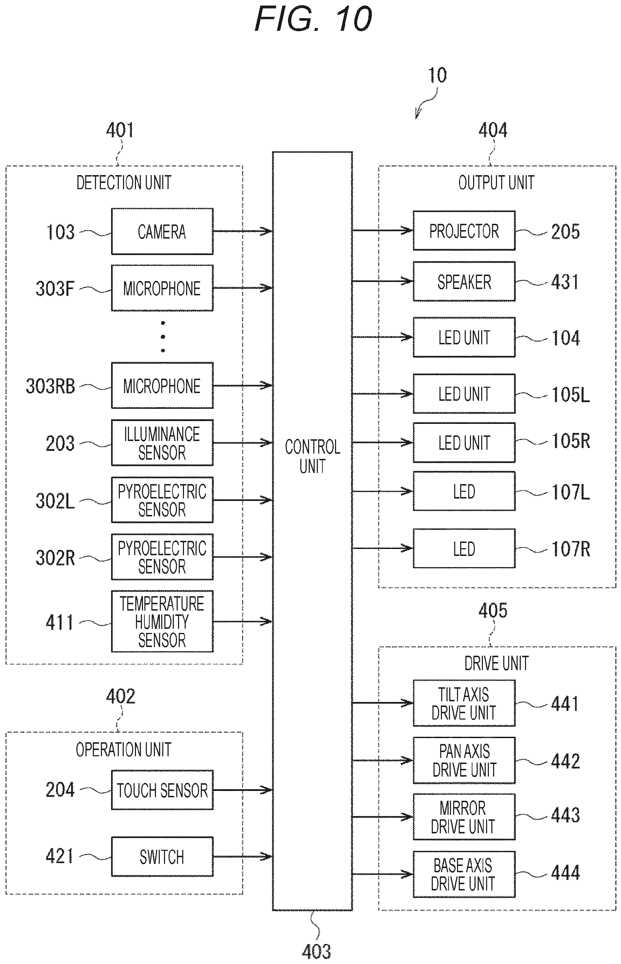

Furthermore, the head portion 11 can be pushed down by a predetermined distance. For example, when a user pushes down the head portion 11 by the hand, a switch 421 (Fig. 10) provided inside the display device 10 is turned on, and when the user releases the hand, the head portion 11 returns to the original position and the switch 421 is turned off. Then, the switch 421 supplies an operation signal to a control unit 403 (Fig. 10).

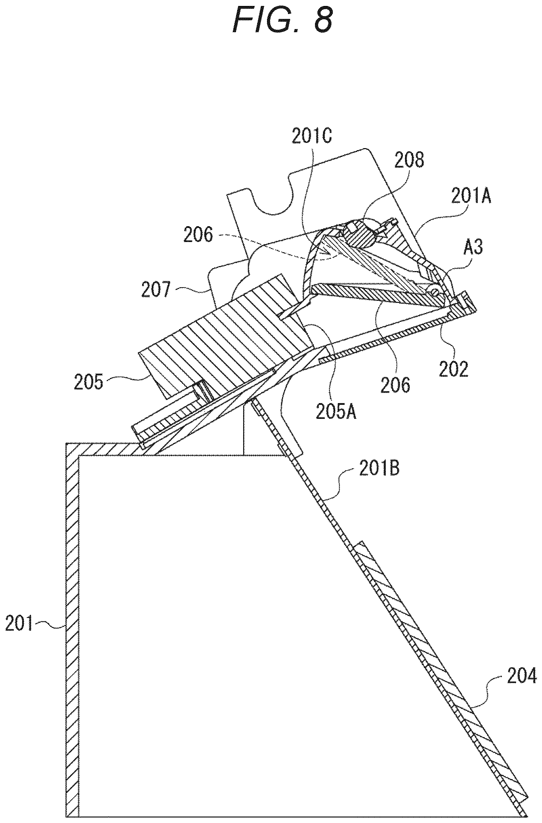

A protruding portion 12B protruding toward a front side is formed on a front upper side of the main body 12. A lower surface of the protruding portion 12B is formed with an emission port 12C that is a rectangular opening. Projection light projected from a projector 205 (Fig. 8 and the like) built in the main body 12 is emitted to the outside of the main body 12 from the emission port 12C. Then, an image is projected by the projection light emitted from the emission port 12C on a screen 23 or an installation surface on which the display device 10 is placed. Note that an image displayed by the projection light may be either a moving image or a still image.

An inclined surface 12D is formed under the protruding portion 12B. The inclined surface 12D is inclined steeper than a peripheral surface thereof, an upper side thereof is recessed deeper than side surfaces of the main body 12, and a lower side thereof protrudes higher than the side surfaces of the main body 12.

Mesh holes 22 are formed at an upper end portion of the inclined surface 12D. The mesh holes 22 are provided in order to output sound to the outside from a speaker 431 (Fig. 10) built in the main body 12.

The screen 23 is provided under the mesh holes 22 of the inclined surface 12D. The screen 23 is exposed to the outside and directed in an upper oblique direction (direction more upward than the horizontal direction), and is visible from the outside. The screen 23 is used as a projection plane in order to project an image by projection light projected from the projector 205. Furthermore, the screen 23 constitutes a touch panel by being combined with a touch sensor 204 described later. As the screen 23, for example, a diffusion screen (for example, a mat screen) is adopted in order to prevent speckles. Additionally, UV coating is applied to a surface of the screen 23 so as to avoid deterioration even though the surface is repeatedly touched by a user.

The base portion 13 has a cup-like shape having a planar bottom surface. The base portion 13 supports the main body 12 in a manner rotatable in the horizontal direction. Additionally, a direction of the screen 23 can be changed, a projection position of an image can be moved on the installation surface, and the photographing direction of the photographing unit 21 can be moved by rotating the main body 12 in the horizontal direction together with the head portion 11 around the base portion 13.

Additionally, a connection terminal (not illustrated) to connect, for example, an AC adapter, a USB cable, and the like is provided on a rear side of a side surface of the base portion 13.

### [Exemplary Structure Inside Outer Package of Display Device 10]

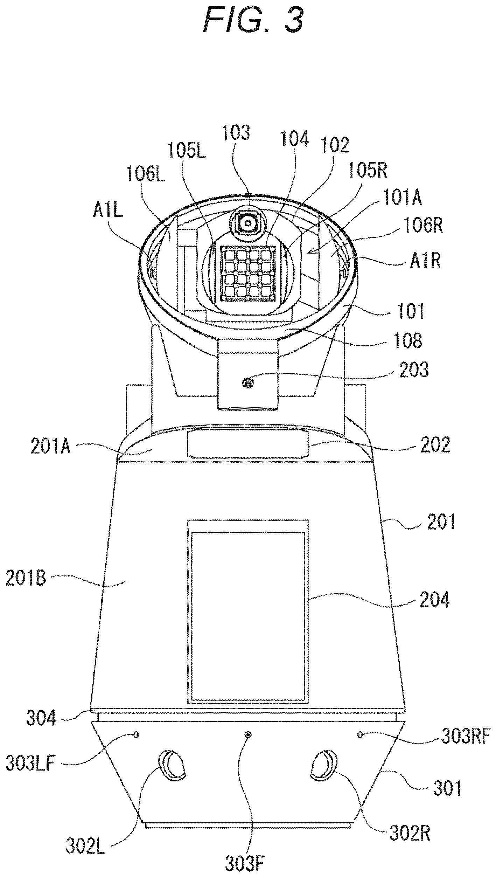

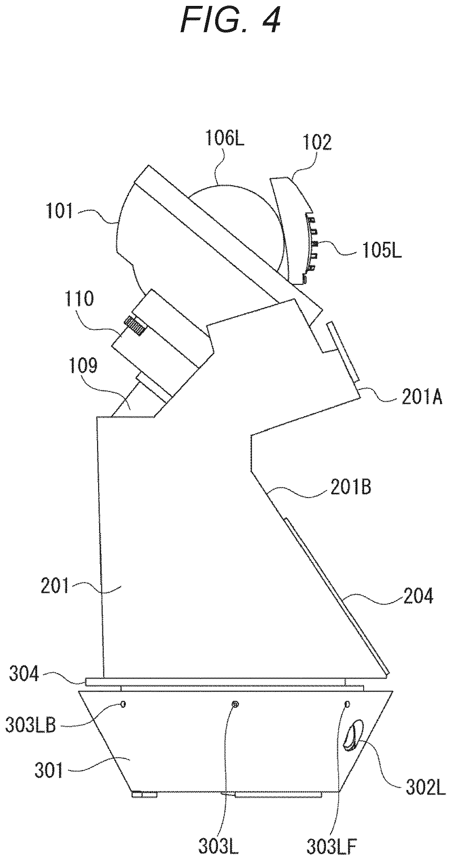

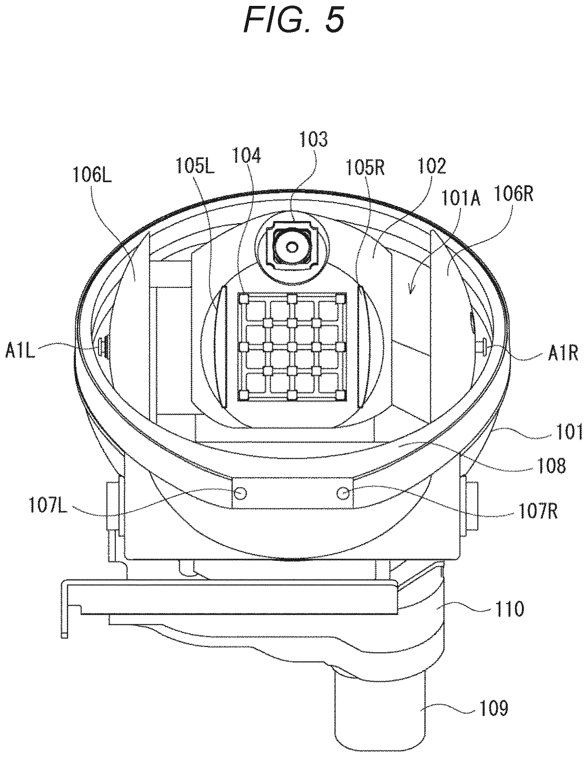

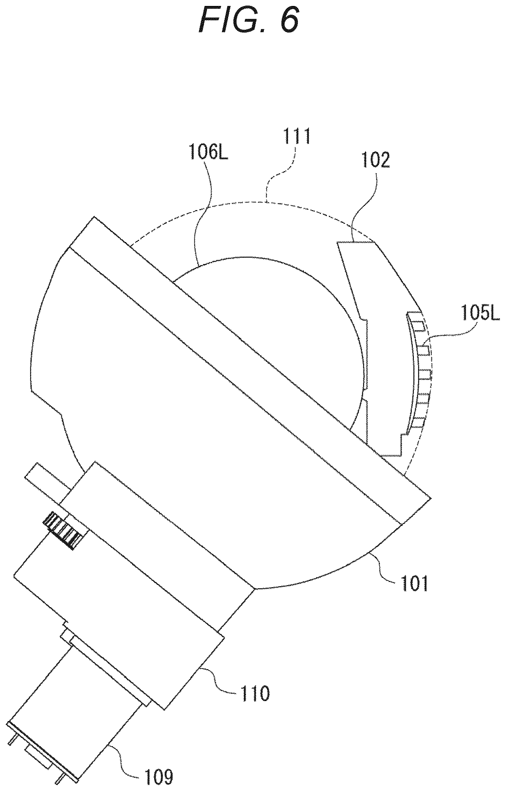

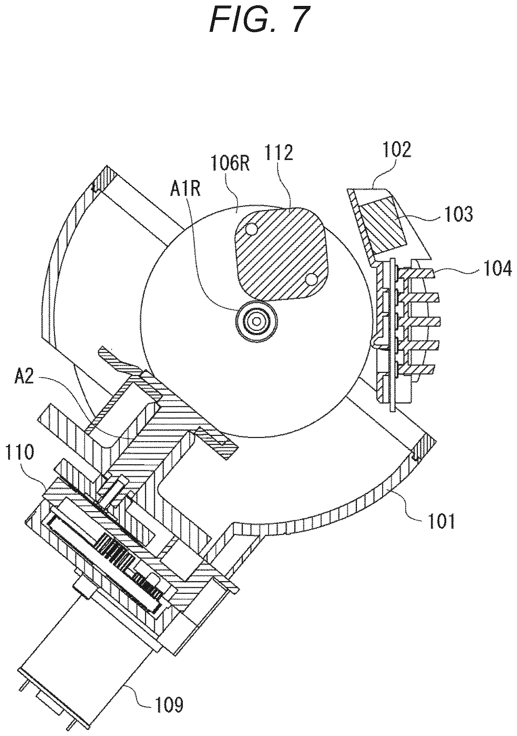

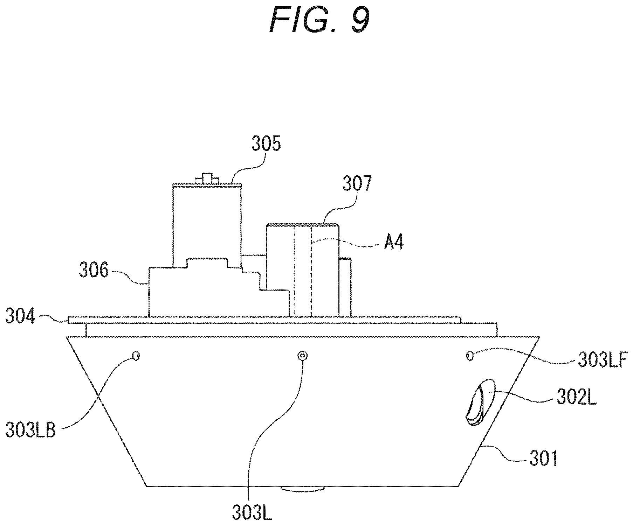

Next, a structure inside an outer package of the display device 10 will be described with reference to Figs. 3 to 9. Fig. 3 is a front view schematically illustrating the display device 10 in a state in which the outer package is removed, and Fig. 4 is a left side view schematically illustrating the display device 10 in the state in which the outer package is removed. Fig. 5 is a front view schematically illustrating the head portion 11 of the display device 10 in the state in which the outer package is removed, Fig. 6 is a left side view schematically illustrating the head portion 11 of the display device 10 in the state in which the outer package is removed, and Fig. 7 is a left side view schematically illustrating a cross-section of the head portion 11 of the display device 10 in the state in which in the state in which the outer package is removed. Fig. 8 is a left side view schematically illustrating a cross-section of the main body 12 of the display device 10 in the state in which the outer package is removed. Fig. 9 is a left side view schematically illustrating the base portion 13 of the display device 10 in the state in which the outer package is removed.

As illustrated in Figs. 5 to 7, the head portion 11 includes a base member 101 having a nearly hemispherical shape as a base. Meanwhile, the base member 101 is actually formed of a plurality of members, but here the base member is illustrated as one member to simplify the drawings.

An upper surface of the base member 101 is directed in a front upper oblique direction, and formed with a circular opening 101A. Additionally, a substrate 102 and the like are provided inside the opening 101A.

The substrate 102 is installed in a manner directed to substantially the front side of the display device 10 at a standard position in which the head portion 11 is not rotated. A camera 103 constituting the photographing unit 21 (Fig. 1) is provided in the vicinity of an upper center end portion of the substrate 102. At the upper portion of the main body 12, the camera 103 performs photographing in a direction in which the head portion 11 is directed, and supplies an image signal obtained as a result of photographing to the control unit 403 (Fig. 10) provided inside the display device 10.

An LED unit 104 is provided on the substrate 102 below the camera 103, and LED units 105L and 105R are provided on left and right sides of the LED unit 104. The LED unit 104, and the LED units 105L and 105R are used in order to represent expressions and feelings of the robot.

Specifically, as illustrated in Fig. 5, five LEDs are arrayed in the LED unit 104 in each of columns in a vertical direction, a lateral direction, a left oblique direction, and a right oblique direction. Among these LEDs, a central LED is shared by the respective columns, and therefore, total seventeen LEDs are arranged. Each of the LEDs can be individually turned on and off, and expressions and feelings of the robot can be represented by, for example, flickering patterns of each of the LEDs.

In each of the LED units 105L and 105R, five LEDs are arrayed in a longitudinal direction. The LED units 105L and 105R represent eye movement of the robot. For example, blinking is reproduced by: turning off the LEDs sequentially from a top to a bottom in a state where the five LEDs in each of the LED units 105L and 105R are turned on; and then sequentially turning on the LEDs from the bottom to the top.

Additionally, a cover 106L and a cover 106R each having a spherical crown shape are provided on the left and right sides of the substrate 102 inside the opening 101A of the base member 101. The cover 106L is attached to the tilt axis A1L extending in the lateral direction such that a curved surface is directed to the left side. The cover 106R is attached to the tilt axis A1R having a center coinciding with the tilt axis A1L, and is arranged at a position substantially symmetrical with the cover 106L. The cover 106L and the cover 106R function to hide mainly the inside of the head portion 11 so as not to be seen from the outside.

Furthermore, the substrate 102 is attached to an outer package 111 of the head portion 11 indicated by a dotted line in Fig. 6. The outer package 111 is attached to the tilt axes A1L and A1R. Furthermore, rotation of the tilt axes A1L and A1R is controlled by a tilt axis drive unit 441 (Fig. 10) formed of a motor 112 and the like illustrated in Fig. 7. Additionally, with rotation of the tilt axes A1L and A1R, the outer package 111 and the substrate 102 of the head portion 11 are rotated around the tilt axes A1L and A1R in a perpendicular direction.

An LED 107L and an LED 107R are provided in the vicinity of an upper end of a front surface of the base member 101. The LED 107L and the LED 107R each include, for example, three color LEDs of red, green, and blue. Additionally, a ring-shaped light guide tube 108 which is discontinuous on the front face of the base member 101 is built in a circumferential portion of the upper end of the base member 101. Furthermore, light emitted from each of the LED 107L and the LED 107R is guided to the light guide tube 108 and diffused to the outside from the light guide tube 108. Consequently, colorful light is emitted from the circumferential portion of the upper end of the base member 101, and feelings of the robot is represented by this light, for example.

Additionally, as illustrated in Figs. 6, 7, and the like, a motor 109 and a gear box 110 are provided below the base member 101. Then, rotation of a pan axis A2 illustrated in Fig. 7 is controlled by a pan axis drive unit 442 (Fig. 10) formed of the motor 109, gear box 110, and the like. The pan axis A2 is directed in a front upper oblique direction of the head portion 11, and with rotation of the pan axis A2, the base member 101, substrate 102, outer package 111, and the like of the head portion 11 are integrally rotated in the lateral direction (strictly speaking, lateral oblique directions).

As illustrated in Fig. 8, the main body 12 includes a base member 201 as a base. Note that the base member 201 is actually formed of a plurality of members, but here the base member is illustrated as one member to simplify the drawings.

As illustrated in Figs. 3 and 4, a cover 202 to close the emission port 12C is provided at a protruding portion 201A of the base member 201 having a shape corresponding to the protruding portion 12B of the main body 12 such that a user's hand, an object, or the like does not enter the inside of the display device 10 from the emission port 12C (Fig. 1) of the protruding portion 12B. The cover 202 is made of, for example, a material that is transparent and applied with antireflection treatment (for example, AR coating), and transmits projection light of the projector 205 without reflection.

Additionally, as illustrated in Fig. 3, an illuminance sensor 203 is provided on a front surface of the protruding portion 201A of the base member 201. The illuminance sensor 203 detects brightness in the periphery of the display device 10 and supplies a detection signal indicating a detection result to the control unit 403 (Fig. 10).

Furthermore, as illustrated in Figs. 3 and 4, a touch sensor 204 is provided at a position corresponding to the screen 23 of the inclined surface 12D (Fig. 1) in an inclined surface 201B of the base member 201 having a shape corresponding to the inclined surface 12D of the main body 12. The touch sensor 204 constitutes the touch panel together with the screen 23. Additionally, the touch sensor 204 detects operation on the screen 23 (touch panel), and supplies an operation signal indicating a detection result to the control unit 403 (Fig. 10).

Meanwhile, a type of the touch sensor 204 is not particularly limited, but for example, a capacitance type is adopted. Additionally, the touch sensor 204 may detect not only touch of a finger or the like on the screen 23 but also approach thereof.

Furthermore, as illustrated in Fig. 8, the projector 205 is provided in a manner such that a projection port 205A is directed in an upper front oblique direction of the display device 10 on a rear side of a lower surface of the protruding portion 201A of the base member 201. Additionally, a mirror 206 is provided in front of the projection port 205A of the projector 205. Projection light projected from the projector 205 is reflected by the mirror 206, thereby changing a direction of the projection light in a direction of the cover 202 (emission port 12C), and the projection light passes through the cover 202 and is emitted to the outside of the display device 10.

Here, the mirror 206 is rotatably supported around a mirror axis A3 extending in the horizontal direction by a mirror drive unit 443 (Fig. 10) formed of a motor 207, a cam 208, and the like. Additionally, an installation position of the mirror 206 is switched to any one of a position indicated by a solid line and a position indicated by a dotted line in Fig. 8 in accordance with a position in the rotational direction of the cam 208, thereby changing a direction (angle) of the mirror 206 with respect to the projection port 205A of the projector 205.

Additionally, in a case where the mirror 206 is installed at the position indicated by the solid line, projection light from the projector 205 is reflected in a front lower oblique direction of the main body 12, and an image by the projection light is projected on the installation surface on which the display device 10 is placed. On the other hand, in a case where the mirror 206 is installed at the position indicated by the dotted line, projection light from the projector 205 is reflected in a direction of the screen 23, and an image by the projection light is projected on the screen 23. In other words, the projection position of an image is switched between the installation surface and the screen 23 by changing the direction of the mirror 206 to change the direction of the projection light reflected by the mirror 206.

Additionally, compared with the case where the image is projected on the screen 23, a display size of an image can be more enlarged by projecting the image on the installation surface. On the other hand, an image can be surely displayed by projecting the image on the screen 23 regardless of an obstacle or the like in the periphery of the display device 10.

Furthermore, the projection port 205A of the projector 205 and the mirror 206 are formed of a part of the base member 201, and are arranged inside a shielded space 201C that prevents light leakage. The shielded space 201C has an opening at a position corresponding to the emission port 12C of the main body 12, and the opening is closed by the cover 202. Additionally, projection light projected from the emission port 12C is reflected in a downward direction by the mirror 206 and emitted from the opening. Since the projection port 205A and the mirror 206 are thus arranged inside the shielded space 201C and projection light is emitted from the opening of the shielded space 201C in a direction more downward than the horizontal direction, the projection light is prevented from entering user's eyes, and safety is secured.

As illustrated in Fig. 9, the base portion 13 includes, as a base, a base member 301 having substantially the same shape as that of the base portion 13. Note that the base member 301 is actually formed of a plurality of members, but here the base member is illustrated as one member to simplify the drawings.

As illustrated in Fig. 3, pyroelectric sensors 302L and 302R are provided in the front side of side surfaces of the base member 301. The pyroelectric sensors 302L and 302R detect an object in the periphery of the display device 10 and each thereof supplies a detection signal indicating a detection result to the control unit 403 (Fig. 10). The pyroelectric sensors 302L and 302R are installed mainly for the purpose of detecting a person in the periphery of the display device 10.

Additionally, as illustrated in Figs. 3 and 9, microphones 303F to 303RB are built in along an outer periphery of the base member 301 in the vicinity of an upper end of the side surfaces of the base member 301. The microphone 303F is installed at a substantially front surface of the base member 301 and particularly has a strong directionality in a front direction of the display device 10. The microphone 303LF is installed at a position away from the microphone 303F in the left direction at an angle of 45° and particularly has a strong directionality in a front right oblique direction of the display device 10. The microphone 303L is installed at a position away from the microphone 303F in the left direction at an angle of 90° and particularly has a strong directionality in a right direction of the display device 10. The microphone 303LB is installed at a position away from the microphone 303F in the left direction at an angle of 135° and particularly has a strong directionality in a rear right oblique direction of the display device 10. The microphone 303RF is installed at a position laterally symmetric with the microphone 303LF and particularly has a strong directionality in a front left oblique direction of the display device 10. The microphone 303R (not illustrated) is installed at a position laterally symmetric with the microphone 303L and particularly has a strong directionality in the left direction of the display device 10. The microphone 303RB is installed at a position laterally symmetric with the microphone 303LB and particularly has a strong directionality in a rear left oblique direction of the display device 10.

The microphones 303F to 303RB detect sound in the periphery of the display device 10, and supply sound signals each indicating detected sound to the control unit 403 (Fig. 10). For example, the control unit 403 can detect a direction of a sound source on the basis of sound signals from the microphones 303F to 303RB. For example, when a user talks to the display device 10, the control unit 403 can detect a direction of the user as a sound source on the basis of the sound signals from the microphones 303F to 303RB.

A rotary table 304 having a D-cut shape obtained by cutting a part of a circle is installed on an upper surface of the base member 301. The base member 201 constituting the main body 12 is installed on an upper surface of the rotary table 304. Additionally, a motor 305, a gear box 306, and a gear box 307 are provided on the upper surface of the base member 301. A base axis A4 that passes through a center of the base member 301 and extends in the perpendicular direction is provided inside the gear box 307.

Then, rotation of the base axis A4 is controlled by a base axis drive unit 444 (Fig. 10) formed of the motor 305, gear box 306, gear box 307, and the like. Additionally, with rotation of the base axis A4, the rotary table 304 and the base member 201 installed at the rotary table 304 are rotated in the horizontal direction. Consequently, the head portion 11 and the main body 12 are integrally rotated in the horizontal direction, and directions of the head portion 11 and the main body 12 can be changed.

Additionally, a temperature humidity sensor 411 (Fig. 10) is built in the vicinity of a bottom surface of the base member 301. The temperature humidity sensor 411 detects a temperature and a humidity in the periphery of the display device 10 and supplies a detection signal indicating a detection result to the control unit 403 (Fig. 10).

As described above, in the display device 10, the head portion 11 can be rotated in the perpendicular direction around the tilt axes A1L and A1R. Additionally, the head portion 11 can be rotated in the lateral oblique directions around the pan axis A2. Consequently, a direction of the head portion 11 can be vertically and laterally rotated while the main body 12 is kept still. As a result, a photographing direction of the photographing unit 21 (camera 103) provided in the head portion 11 can be vertically and laterally rotated. Additionally, a direction of a face of the head portion 11 represented by the LED unit 104 and the LED units 105L and 105R can be vertically and laterally rotated

Furthermore, the mirror 206 can be rotated in the perpendicular direction around the mirror axis A3. Consequently, a projection position of an image by projection light from the projector 205 can be switched to the screen 23 or the installation surface located on the front side of the main body 12.

Additionally, the head portion 11 and the main body 12 can be rotated in the horizontal direction around the base axis A4. Consequently, a direction of the screen 23 can be laterally rotated. Furthermore, a projection position in a case of projecting an image on the installation surface can be rotated in the horizontal direction around the display device 10. Moreover, the photographing direction of the photographing unit 21 (camera 103) and a direction of the face of the head portion 11 can be laterally rotated.

Thus, the display device 10 can switch a projection position of an image to the installation surface or the screen 23, or can move the projection position on the installation surface. Additionally, the display device 10 can move the photographing direction of the camera 103 in a wide range, and for example, a user can perform tracking with high accuracy.

### [Processing of Display Device 10]

Next, an example of part of processing of the display device 10 will be described with reference to Fig. 10.

Fig. 10 is a block diagram illustrating exemplary functional components of the display device 10.

The display device 10 includes a detection unit 401, an operation unit 402, a control unit 403, an output unit 404, and a drive unit 405.

The detection unit 401 includes the camera 103, the illuminance sensor 203, the pyroelectric sensors 302L and 302R, the microphones 303F to 303RB, and the temperature humidity sensor 411, and detects surrounding condition of the display device 10. The surrounding condition includes, for example, information on a user (e.g., presence/absence, identification information, state, utterance, and the like of a user) in the periphery of the display device 10. Additionally, the surrounding condition also includes seasons, days of the week, time zones and the like obtained by a clock (not illustrated) and the like, for example. The respective components of the detection unit 401 supply various kinds of signals indicating detection results of the surrounding condition to the control unit 403.

The operation unit 402 includes the touch sensor 204 and the switch 421 to be used to operate the display device 10. The respective components of the operation unit 402 supply signals indicating operation content to the control unit 403. Meanwhile, the display device 10 can be operated in accordance with a gesture or a voice command by using the camera 103 and microphones 303F to 303RB included in the detection unit 401.

The control unit 403 is formed of, for example, a processor such as a CPU, a memory, and the like, and controls the display device 10.

The output unit 404 includes the LED unit 104, LED units 105L and 105R, LEDs 107L and 107R, projector 205, and speaker 431, and outputs various kinds of information by using light, sound, or an image under the control of the control unit 403.

The drive unit 405 includes the tilt axis drive unit 441, pan axis drive unit 442, mirror drive unit 443, and base axis drive unit 444, and controls rotation of each of rotation axes and the mirror 206 of the display device 10 under the control of the control unit 403.

For example, the display device 10 interactively communicates with a user in accordance with surrounding condition (including a state of a user and the like) and user's operation. For example, the display device 10 talks with a user and exchanges information and messages by using images (moving image, still image, text, and the like) and sound. Furthermore, the display device 10 represents feelings by using an image, sound, light, and motions of the head portion 11 and the main body 12.

Note that the control unit 403 identifies each user by, for example, image recognition and the like and learns content of communication with each user. Additionally, the control unit 403 performs appropriate communication suitable for each user in accordance with the surrounding condition.

Additionally, for example, the display device 10 can set a projection position of an image at an appropriate position on the basis of the surrounding condition of the display device 10.

For example, in a case of projecting an image on an installation surface located outside, the control unit 403 controls a projection position so as to avoid an obstacle when the obstacle that may obstruct projection light is detected by the detection unit 401. For example, the control unit 403 controls the base axis drive unit 444 to change a direction of the main body 12, thereby moving the projection position on the installation surface to a position where the projection light is not obstructed by the obstacle. Alternatively, for example, the control unit 403 controls the mirror drive unit 443 to switch the projection position to the screen 23 from the installation surface located outside.

Consequently, the obstacle can be avoided and an entire image can be clearly projected on the installation surface or the screen 23, and visibility of the image is improved.

Additionally, for example, the control unit 403 can set the projection position at an appropriate position in accordance with a user's position. For example, the control unit 403 controls the base axis drive unit 444 to change the direction of the main body 12, thereby moving the projection position to a position on the installation surface which a user can easily see. Furthermore, for example, the control unit 403 controls the mirror drive unit 443 in accordance with the user's position and switches the projection position from the installation surface to the screen 23 or switches the projection position from the screen 23 to the installation surface.

Meanwhile, whether the projection position is to be moved on the installation surface or switched to the screen 23 is selected on the basis of, for example, the surrounding condition, a preset priority order, and the like. For example, in a case where an obstacle cannot be avoided despite a fact that the projection position is moved on the installation surface, the projection position can be switched to the screen 23. Additionally, for example, one of the installation surface and the screen 23 which a user can see more easily can be selected. Furthermore, for example, in a case where an obstacle is detected, the projection position can be immediately switched to the screen 23 without being moved on the installation surface. Also, for example, in a case where it is detected that an obstacle is not present anymore, the projection position may be returned to where it has been.

Thus, visibility of an image is improved by setting a projection position of an image at an appropriate position. Additionally, since a projection position is changed by one projector 205 while using the mirror 206, more power saving and space saving can be achieved compared with a case of using a plurality of projectors 205.

Meanwhile, a projection position can be moved by user's operation. In this case, the tilt axis drive unit 441 to the base axis drive unit 444 may be driven by user's operation, or a user may rotate the head portion 11, the main body 12, and the mirror 206 directly by hand.

Additionally, for example, in a case where an obstacle is detected, information to provide a notification of presence of the obstacle may be output from the output unit 404 so as to notify a user of the presence of the obstacle. As means to notify presence of an obstacle, any one of an image, voice, light, motion of the head portion 11, motion the main body 12 may be used, or a combination of a plurality of means may also be used. For example, an image that provides a notification of presence of an obstacle can be projected by the projector 205, or sound that provides a notification of presence of an obstacle can be output from the speaker 431. Furthermore, the information to notify a user may include not only presence/absence of an obstacle but also detailed information such as a position, a type, and the like of an obstacle. Consequently, a user can quickly notice presence of an obstacle, and can promptly display an image normally by, for example, removing an obstacle, moving the display device 10, or moving a projection position thereof.

Furthermore, for example, the control unit 403 can detect more correctly surrounding condition by controlling the tilt axis drive unit 441, pan axis drive unit 442, and base axis drive unit 444 on the basis of the surrounding condition of the display device 10 to change directions of the head portion 11 and the main body 12 and change a direction of the camera 103. As a result, for example, detailed information on an obstacle in the periphery of the display device 10 can be acquired and a position where there is no obstacle can be easily detected.

### <2. Modified Examples>

In the following, modified examples of the above-described embodiment of the present technology will be described.

In the above description, described is the example in which a reflection direction of projection light is controlled by rotating the mirror 206 and a projection position of an image is moved, but the reflection direction of the projection light may be controlled by a method other than rotation. For example, a reflection direction of projection light may be controlled by moving the mirror in a direction parallel or perpendicular to a surface thereof, or by combining rotation with movement in a direction parallel or perpendicular to the surface thereof. Also, a reflection direction of projection light may be controlled by, for example, switching a reflection surface of a mirror having a plurality of reflection surfaces each having different reflecting directions, or by using the plurality of mirrors differently depending on cases.

Additionally, means to change a direction of the projection light is not limited to a mirror, and other means such as a prism may also be used, for example.

Furthermore, it is also possible to move a projection position of an image by, for example, changing a direction of the projection port 205A of the projector 205 without using the means to change the direction of the mirror 206 or the like.

Additionally, in the above description, described is the example in which the installation surface is used as a surface on which an image is projected to the outside of the display device 10, but a surface other than the installation surface can also be used. For example, a surface perpendicular to the installation surface, such as a wall surface, can be used or a ceiling can also be used.

Furthermore, a projection plane in the outside may also be selected from two or more surfaces instead of limiting the projection plane to one surface, for example. For example, a projection plane in the outside may also be selected from the installation surface and a surface perpendicular to the installation surface.

Additionally, for example, a projection position of an image may be switched between the screen 23 and the outside in accordance with surrounding condition in the periphery of the display device 10 without moving the projection position in the outside. In this case, for example, in a case where two or more projection planes are set outside as described above, an optimum projection position may be selected from a plurality of projection planes in the outside and the screen 23.

Additionally, the structure (position, direction, number, shape, and the like) of the screen 23 is not limited to the above-described example, and can be arbitrarily changed.

Furthermore, the display device 10 may acquire a part or all of information indicating a detection result of surrounding condition from the outside by providing a part or all of components of the detection unit 401 in the outside of the display device 10.

Additionally, in the above-described description, described is the example in which the main body 12 is rotated around the base axis A4 of the base portion 13, but the main body 12 may be rotated independently by providing a rotation axis inside the main body 12 without providing the base portion 13.

Furthermore, rotational directions of the head portion 11 and the main body 12 are not limited to the above-described example, and can be changed.

Also, the head portion 11 and the main body 12 may be moved in a parallel direction and the like other than the rotational direction, for example.

Furthermore, in the present technology, it is conceivable to switch a projection position to the screen 23 or the installation surface without rotation of the main body 12, for example. In this case also, an effect of improving visibility of an image can be exerted.

Additionally, the above-described components of the detection unit 401, operation unit 402, and output unit 404 and installation positions of the respective constituent elements are examples and can be arbitrarily changed.

Furthermore, the above-described series of processing by the control unit 403 can be executed by hardware and also can be executed by software. In the case of executing the series of processing by software, a program constituting the software is installed in the control unit 403, for example.

The program to be executed by the control unit 403 can be provided by being recorded in, for example, a removable medium as a package medium. Also, the program can be provided via a wired or radio transmission medium such as a local area network, the Internet, or digital satellite broadcasting.

Meanwhile, the program executed by the control unit 403 may be a program by which processing is performed in time series or may be a program by which processing is performed in parallel or at a necessary timing such as when the program is called.

Furthermore, the embodiment of the present technology is not limited to the above-described embodiment, and various kinds of modifications can be made within a range without departing from a gist of the present technology.

Additionally, note that the effects described in the present specification are only examples and not limited thereto, and additional effects may be provided as well.

Furthermore, the embodiment of the present technology is not limited to the above-described embodiment, and various kinds of modifications can be made within a range without departing from a gist of the present technology.

Additionally, the present technology may also adopt the following configurations.

(1) A display device including:
   a projection unit adapted to project projection light in order to display an image;
   a direction change unit adapted to change a direction of the projection light;
   a projection plane visible from outside; and
   a first drive unit adapted to set, on the projection plane or outside, a projection position of the image by the projection light by changing the direction of the projection light changed by the direction change unit.
(2) The display device recited in (1) above, further including
   a second drive unit adapted to change directions of the projection unit, the projection plane, and direction change unit, and a main body provided with the first drive unit.
(3) The display device recited in (2) above, further including
   a control unit adapted to move a position at which the image is projected to the outside by controlling the second drive unit on the basis of surrounding condition of the display device to change the direction of the main body.
(4) The display device recited in (3) above,
   in which the control unit changes the direction of the main body in a case where an obstacle that obstructs the projection light is detected.
(5) The display device recited in (3) or (4) above,
   in which the control unit further controls the first drive unit on the basis of surrounding condition of the display device to switch the projection position of the image to the projection plane or the outside.
(6) The display device recited in (5) above,
   in which the control unit sets the projection position of the image on the projection plane in a case where an obstacle that obstructs the projection light is detected.
(7) The display device recited in any one of (3) to (6) above, further including
   an output unit adapted to output information,
   in which the control unit causes the output unit to output information providing a notification of presence of an obstacle in a case where the obstacle that obstructs the projection light is detected.
(8) The display device recited in any one of (3) to (7) above,
   in which the control unit causes the projection unit to project projection light in order to display an image that provides a notification of presence of an obstacle in a case where the obstacle that obstructs the projection light is detected.
(9) The display device recited in any one of (3) to (8) above, further including
   a detection unit adapted to detect surrounding condition of the display device.
(10) The display device recited in (9) above, further including
   a third drive unit adapted to change a direction of the detection unit,
   in which the control unit controls the third drive unit on the basis of the surrounding condition of the display device to change the direction of the detection unit.
(11) The display device recited in (10) above,
   in which the detection unit is installed above the main body.
(12) The display device according to any one of (2) to (11) above, further including
   a base portion adapted to support the main body in a manner rotatable in a horizontal direction,
   in which the second drive unit changes the direction of the main body by rotating the main body.
(13) The display device recited in (1) or (2) above, further including
   a control unit adapted to control the first drive unit on the basis of surrounding condition of the display device to switch the projection position of the image to the projection plane or the outside.
(14) The display device recited in any one of (1) to (13) above, in which
   the direction change unit includes a mirror supported in a manner rotatable around an axis extending in a horizontal direction, and
   the first drive unit changes a direction of the mirror.
(15) The display device recited in any one of (1) to (14) above,
   in which the image is projected on the projection plane or a surface on which the display device is placed.
(16) The display device recited in any one of (1) to (15) above, in which
   a projection port of the projection unit and the direction change unit are arranged inside a shielded space provided with an opening, and
   the projection light having the direction changed by the direction change unit is emitted to the outside of the shielded space from the opening in a direction more downward than the horizontal direction.
(17) The display device recited in (16) above, further including
   a cover that closes the opening and applied with antireflection treatment.
(18) The display device recited in any one of (1) to (17) above,
   in which the projection plane is directed in a direction more upward than the horizontal direction.
(19) The display device recited in any one of (1) to (18) above,
   in which the projection plane is formed of a diffusion screen.
(20) The display device recited in any one of (1) to (19) above, further including
   an operation unit adapted to detect operation on the projection plane.

### REFERENCE SIGNS LIST

- 10: Display device
- 11: Head portion
- 12: Main body
- 12A: Opening
- 12C: Emission port
- 13: Base portion
- 21: Photographing unit
- 23: Screen
- 101: Base member
- 102: Substrate
- 103: Camera
- 104, 105L, 105R: LED unit
- 107L, 107R: LED
- 108: Light guide tube
- 109: Motor
- 110: Gear box
- 111: Outer package
- 112: Motor
- 201: Base member
- 201C: Shielded closed space
- 203: Illuminance sensor
- 204: Touch sensor
- 205: Projector
- 205A: Projection port
- 206: Mirror
- 207: Motor
- 208: Cam
- 301: Base member
- 302L, 302R: Pyroelectric sensor
- 303F to 303RB: Microphone
- 304: Rotary table
- 305: Motor
- 306,: 307 Gear box
- 401: Detection unit
- 402: Input unit
- 403: Control unit
- 404: Output unit
- 405: Drive unit
- 411: Temperature humidity sensor
- 421: Switch
- 431: Speaker
- 441: Tilt axis drive unit
- 442: Pan axis drive unit
- 443: Mirror drive unit
- 444: Base axis drive unit

## Claims

1. A display device comprising:
a projection unit configured to project projection light in order to project an image;
a direction change unit configured to change a direction of the projection light;
a projection plane visible from outside; and
a first drive unit configured to set, on the projection plane or outside, a projection position of the image by the projection light by changing the direction of the projection light changed by the direction change unit.

2. The display device according to claim 1, further comprising
a second drive unit configured to change directions of the projection unit, the projection plane, and the direction change unit, and a main body provided with the first drive unit.

3. The display device according to claim 2, further comprising
a control unit configured to move a position at which the image is projected to the outside by controlling the second drive unit on the basis of surrounding condition of the display device to change the direction of the main body.

4. The display device according to claim 3,
wherein the control unit changes the direction of the main body in a case where an obstacle that obstructs the projection light is detected.

5. The display device according to claim 3,
wherein the control unit further controls the first drive unit on the basis of surrounding condition of the display device to switch the projection position of the image to the projection plane or the outside.

6. The display device according to claim 5,
wherein the control unit sets the projection position of the image on the projection plane in a case where an obstacle that obstructs the projection light is detected.

7. The display device according to claim 3, further comprising
an output unit configured to output information,
wherein the control unit causes the output unit to output information that provides a notification of presence of an obstacle in a case where the obstacle that obstructs the projection light is detected.

8. The display device according to claim 3,
wherein the control unit causes the projection unit to project projection light in order to display an image that provides a notification of presence of an obstacle in a case where the obstacle that obstructs the projection light is detected.

9. The display device according to claim 3, further comprising
a detection unit configured to detect surrounding condition of the display device.

10. The display device according to claim 9, further comprising
a third drive unit configured to change a direction of the detection unit,
wherein the control unit controls the third drive unit on the basis of the surrounding condition of the display device to change the direction of the detection unit.

11. The display device according to claim 10,
wherein the detection unit is installed above the main body.

12. The display device according to claim 2, further comprising
a base portion configured to support the main body in a manner rotatable in a horizontal direction,
wherein the second drive unit changes the direction of the main body by rotating the main body.

13. The display device according to claim 1, further comprising
a control unit configured to control the first drive unit on the basis of surrounding condition of the display device to switch the projection position of the image to the projection plane or the outside.

14. The display device according to claim 1,
wherein the direction change unit includes a mirror supported in a manner rotatable around an axis extending in a horizontal direction, and
the first drive unit changes a direction of the mirror.

15. The display device according to claim 1,
wherein the image is projected on the projection plane or a surface on which the display device is placed.

16. The display device according to claim 1,
wherein a projection port of the projection unit and the direction change unit are arranged inside a shielded space provided with an opening, and
the projection light having the direction changed by the direction change unit is emitted to the outside of the shielded space from the opening in a direction more downward than the horizontal direction.

17. The display device according to claim 16, further comprising
a cover that closes the opening and applied with antireflection treatment.

18. The display device according to claim 1,
wherein the projection plane is directed in a direction more upward than the horizontal direction.

19. The display device according to claim 1,
wherein the projection plane is formed of a diffusion screen.

20. The display device according to claim 1, further comprising
an operation unit configured to detect operation on the projection plane.
